# EUROPÄISCHE PATENTSCHRIFT

(11) **EP 2 921 334 B1**
(45) Veröffentlichungstag und Bekanntmachung des Hinweises auf die Patenterteilung: **04.04.2018**
(21) Anmeldenummer: 15155913.5
(22) Anmeldetag: 20.02.2015
(51) Int. Cl.: B60K 17/344, B60K 25/06, B60K 17/28, B60K 17/36, B60K 17/346, F16H 48/20

(54) **Verteilergetriebe**
Distributor gear
Boîte de transfert

(30) Priorität: 20.03.2014 DE 102014205229
(43) Veröffentlichungstag der Anmeldung: 23.09.2015
(73) Patentinhaber: ZF Friedrichshafen AG, 88046 Friedrichshafen (DE)
(72) Erfinder: Reitinger, Franz, 4091 Vichtenstein (AT)

(56) Entgegenhaltungen:
- WO-A2-03/042564
- AT-B- 333 132
- DE-A1-102010 040 883
- GB-A- 2 158 787
- US-A1- 2005 137 042

## Beschreibung

Die Erfindung betrifft ein Verteilergetriebe für Nutzfahrzeuge mit mehreren angetriebenen Achsen, wobei das Verteilergetriebe ein Differenzialgetriebe beinhaltet, welches sperrbar ausgeführt ist.

Die EP 1254326 B1 offenbart ein gattungsgemäßes Verteilergetriebe für Nutzfahrzeuge, bei welchem die Antriebswelle und eine erste Abtriebswelle koaxial angeordnet sind und eine zweite Abtriebswelle beabstandet zur Antriebswelle angeordnet ist und ein Differenzialgetriebe koaxial zur Antriebswelle angeordnet ist.

Aus der WO 03/042564 A2 ist ein Verteilergetriebe bekannt, umfassend eine Antriebswelle, zwei Abtriebswellen und ein Planetengetriebe. Das Planetengetriebe verbindet die Antriebswelle mit der ersten und der zweiten Abtriebswelle. Mittels einer Differentialsperre ist eine Ausgleichsfunktion des Verteilergetriebes sperrbar.

Aus der US 2005/137042 ist ein hybrides elektromechanisches Compound-Split-Getriebe mit zwei Betriebsarten bekannt. Das Getriebe umfasst u.a. eine Antriebswelle und eine Nebenabtriebswelle, wobei die Nebenabtriebswelle in permanenter Wirkverbindung mit der Antriebswelle steht.

Der vorliegenden Erfindung liegt die Aufgabe zugrunde ein Verteilergetriebe für Nutzfahrzeuge zu schaffen, bei welchem die Antriebswelle und die erste Abtriebswelle koaxial zueinander angeordnet sind und die zweite Abtriebswelle beabstandet zur Antriebswelle angeordnet ist und ein Differenzialgetriebe koaxial zur Antriebswelle angeordnet ist und das Verteilergetriebe einen Nebenabtrieb aufweist, wobei das Verteilergetriebe in seiner Baulänge sehr kurz auszuführen ist und der Nebenabtrieb bei Stillstand des Fahrzeugs betreibbar sein muss.

Die Aufgabe wird durch ein auch die kennzeichnenden Merkmale des Hauptanspruchs aufweisendes gattungsgemäßes Verteilergetriebe gelöst.

Erfindungsgemäß weist das Verteilergetriebe eine Antriebswelle und eine erste Abtriebswelle und eine zweite Abtriebswelle auf, wobei die zweite Abtriebswelle beabstandet zur Antriebswelle angeordnet ist und die erste Abtriebswelle koaxial zur Antriebswelle angeordnet ist. Ein Differenzialgetriebe ist koaxial zur Antriebswelle angeordnet und ein Nebenabtrieb steht in permanenter Wirkverbindung mit der Antriebswelle.

Damit der Nebenabtrieb beim Stillstand des Fahrzeugs betreibbar ist, kann eine Antriebswelle des Differenzialgetriebes von der Antriebswelle des Verteilergetriebes abgekoppelt werden, wodurch die Antriebswelle des Differenzialgetriebes bei drehender Antriebswelle des Verteilergetriebes still steht.

Zusätzlich besteht noch die Möglichkeit, den Abtriebsflansch des Nebenabtriebs über eine Kupplung zuzuschalten oder abzukoppeln.

Das Differenzialgetriebe ist als Planetengetriebe ausgeführt. Beim Differenzialgetriebe, welches als Planetengetriebe ausgebildet ist, ist das Hohlrad mit der ersten Abtriebswelle wirkverbunden und der Planetenträger ist über eine Schalteinrichtung entweder mit der Antriebswelle verbindbar oder von dieser abkoppelbar und bildet die Eingangswelle in das Differenzialgetriebe. Das Sonnenrad des Planetengetriebes ist über ein Stirnradgetriebe mit der zweiten Abtriebswelle wirkverbunden. Erfindungsgemäß ist eine Differenzialsperre im Verteilergetriebe angeordnet und verbindet im gesperrten Zustand das Sonnenrad des Planetengetriebes mit dem Planetenträger. Die Schalteinrichtung der Differenzialsperre ist zwischen dem Stirnrad und dem Planetenrad angeordnet.

In einer, nicht erfindungsgemäßen, Ausgestaltungsform ist im Verteilergetriebe eine Differenzialsperre angeordnet, welche im gesperrten Zustand das Sonnenrad mit dem Planetenträger verbindet, wobei die Schalteinrichtung der Differenzialsperre zwischen dem Stirnradgetriebe für den Nebenabtrieb und dem Stirnradgetriebe für die zweite Abtriebswelle angeordnet ist.

Durch die erfindungsgemäßen Merkmale wird ein Verteilergetriebe geschaffen, welches ein sperrbares Differenzial und einen Nebenabtrieb aufweist, welcher auch im Stillstand mit gutem Wirkungsgrad betreibbar ist, ohne hierbei die Einbaulänge des Verteilergetriebes so zu erhöhen, dass dieses nicht im Nutzfahrzeug verwendbar ist.

Weitere Merkmale sind der Figurenbeschreibung zu entnehmen.

Es zeigen
Fig. 1 ein Getriebeschema einer erfindungsgemäßen Ausführungsform des Verteilergetriebes;
Fig. 2 ein Getriebeschema einer nicht erfindungsgemäßen Ausführung des Verteilergetriebes;

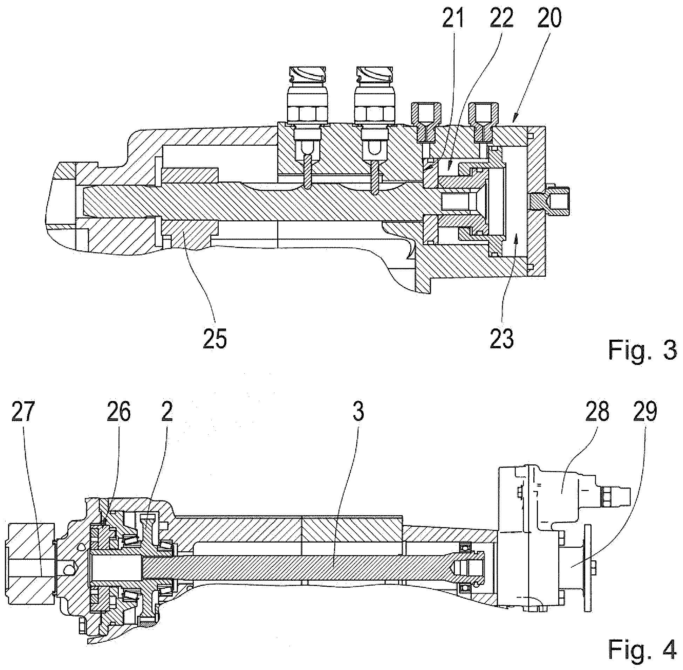

Fig. 3 einen Ausschnitt der Schalteinrichtung der Fig. 2; und
Fig. 4 einen Ausschnitt des Nebenabtriebs der Figs. 1 und 2.

### Figur 1:

Eine Antriebswelle 1 treibt über ein Stirnradgetriebe 2 eine Nebenabtriebswelle 3 an. Eine Schalteinrichtung 4 weist eine erste Stellung 5 und eine zweite Stellung 6 auf, wobei in der ersten Stellung 5 die Antriebswelle 1 von der Eingangswelle 7 abgekoppelt ist und in der zweiten Stellung 6 die Antriebswelle 1 mit der Eingangswelle 7 drehfest verbunden ist. Ist die Schalteinrichtung 4 in der ersten Stellung 5, so wird von der Antriebswelle 1 ausschließlich die Nebenabtriebswelle 3 angetrieben. Ist die Schalteinrichtung 4 in ihrer zweiten Stellung 6, so wird von der Antriebswelle 1 die Nebenabtriebswelle 3 und die Eingangswelle 7 angetrieben. Das Differenzialgetriebe ist als Planetengetriebe 8 ausgebildet, wobei die Eingangswelle 7 mit dem Planetenträger 9 drehfest verbunden ist und das Hohlrad 10 drehfest mit der ersten Abtriebswelle 11 verbunden ist. Das Sonnenrad 12 ist über das Stirnradgetriebe 13 mit der zweiten Abtriebswelle 14 wirkverbunden. Zwischen dem Stirnradgetriebe 13 und dem Planetenrad 15 des Planetengetriebes 8 ist die Schalteinrichtung der Differenzialsperre 16 angeordnet, welche im gesperrten Zustand das Sonnenrad 12 mit dem Planetenträger 9 drehfest verbindet. Die Drehachse der Antriebswelle 1 und die Drehachse der ersten Abtriebswelle 11 und die Drehachse der Eingangswelle 7 sind koaxial angeordnet, wobei die Drehachse der zweiten Abtriebswelle 14 beabstandet zur Drehachse der Antriebswelle 1 angeordnet ist.

### Figur 2:

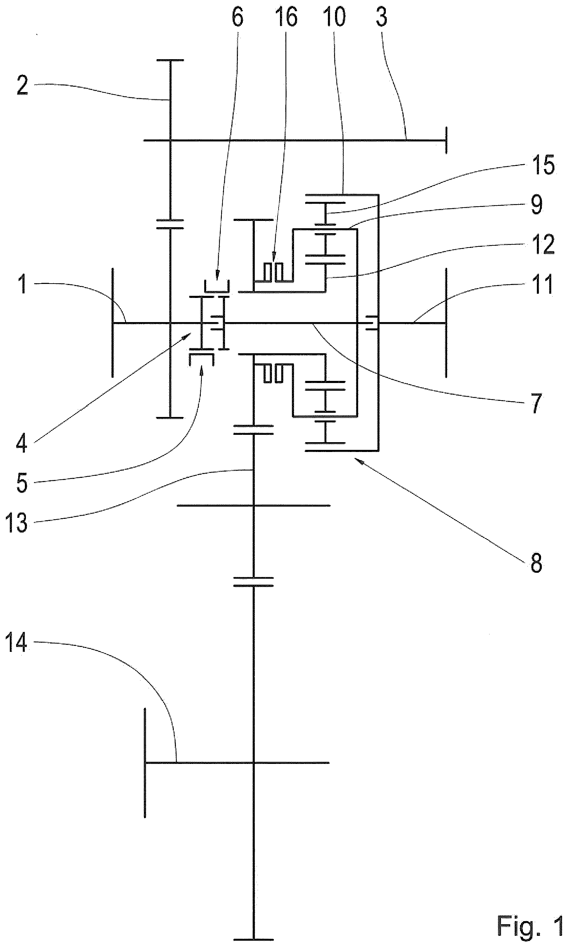

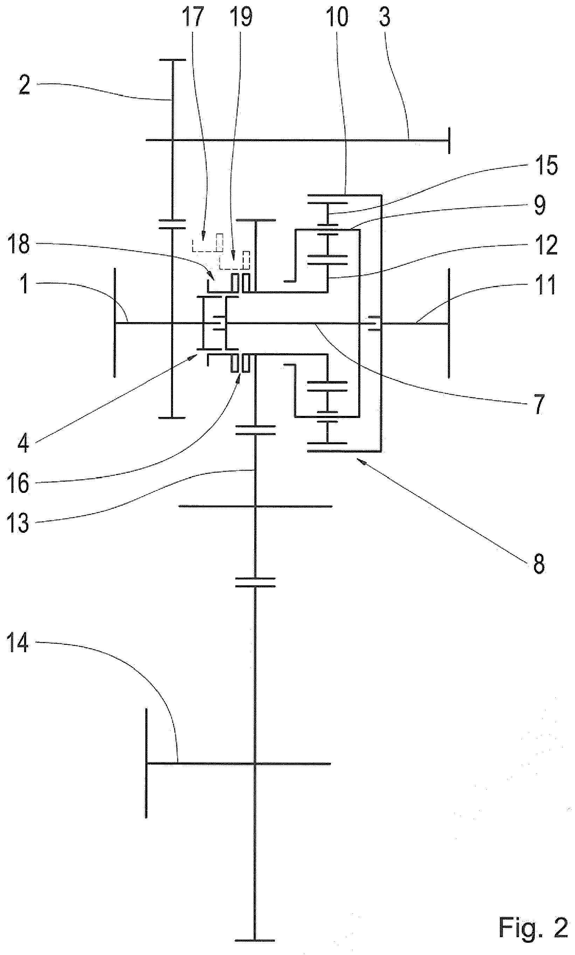

Die Figur 2 unterscheidet sich von der Figur 1 durch die Anordnung und Ausbildung der Schalteinrichtung 4 der Figur 1 und der Schalteinrichtung der Differenzialsperre 16 der Figur 1. Bezüglich der weiteren Bauteile der Figur 2 und deren Funktion, wird auf die Beschreibung der Figur 1 verwiesen, wobei in der Figur 2 für gleiche Bauteile gleiche Bezugszeichen verwendet wurden.

Die Schalteinrichtung 4 und die Schalteinrichtung der Differenzialsperre 16 sind zu einer einzigen Schalteinrichtung funktional zusammengefasst, wobei diese eine Schalteinrichtung drei Schaltstellungen aufweist. In einer ersten Stellung 17 ist sowohl das Sonnenrad 12 als auch die Eingangswelle 7 von der Antriebswelle 1 abgekoppelt. Somit kann die Antriebswelle 1 auch bei stillstehender ersten Abtriebswelle 11 und stillstehender zweiten Abtriebswelle 14 die Nebenabtriebswelle 3 antreiben. In der zweiten Stellung 18 wird die Antriebswelle 1 mit der Eingangswelle 7 drehfest verbunden, aber das Sonnenrad 12 bleibt noch von der Antriebswelle 1 abgekoppelt. In der dritten Stellung 19 ist die Antriebswelle 1 sowohl mit der Sonne 12 als auch mit der Eingangswelle 7 drehfest verbunden, wodurch in dieser Stellung die Differenzialsperre 16 aktiviert ist und die erste Abtriebswelle 11 und die zweite Abtriebswelle 14 und die Nebenabtriebswelle 3 von der Antriebswelle 1 angetrieben werden.

### Figur 3:

Eine Kolbenzylindereinheit 20 verschiebt, je nach Druckbeaufschlagung des Raumes 21, des Raumes 22 oder des Raumes 23, die Schaltwelle 24. Die Schaltwelle kann somit die in Fig. 2 dargestellte erste Stellung 17, zweite Stellung 18 oder dritte Stellung 19 einnehmen. Über die Schaltgabel 25 wird diese Bewegung auf die Schalteinrichtung der Fig. 2 übertragen.

### Figur 4:

Die Nebenabtriebswelle 3 wird über das Stirnradgetriebe 2 angetrieben, wobei zusätzlich eine Ölpumpe 26 angetrieben wird. Diese fördert Druck- und Schmiermittel zum Ölkühler 27 und zu Steuerungs- und Antriebsbauteilen. Es besteht auch die Möglichkeit, dass die Ölpumpe 26 für andere Verbraucher verwendet wird, wobei nicht zwingend ein Ölkühler vorhanden sein muss. Die Nebenabtriebswelle 3 ist mit einer Kupplung 28 verbunden, welche den Nebenabtriebsflansch 29 mit der Nebenabtriebswelle 3 verbindet oder diesen von dieser trennt.

### Bezugszeichen

- 1: Antriebswelle
- 2: Stirnradgetriebe
- 3: Nebenabtriebswelle
- 4: Schalteinrichtung
- 5: erste Stellung
- 6: zweite Stellung
- 7: Eingangswelle
- 8: Planetengetriebe
- 9: Planetenträger
- 10: Hohlrad
- 11: erste Abtriebswelle
- 12: Sonnenrad
- 13: Stirnradgetriebe
- 14: zweite Abtriebswelle
- 15: Planetenrad
- 16: Differenzialsperre
- 17: erste Stellung
- 18: zweite Stellung
- 19: dritte Stellung
- 20: Kolben-Zylinder-Einheit
- 21: Raum
- 22: Raum
- 23: Raum
- 24: Schaltwelle
- 25: Schaltgabel
- 26: Ölpumpe
- 27: Ölkühler
- 28: Kupplung
- 29: Nebenabtriebsflansch

## Patentansprüche

1. Verteilergetriebe mit einer drehbar um eine Drehachse angeordnete Antriebswelle (1) und einer drehbar um eine Drehachse angeordnete erste Abtriebswelle (11) und einer drehbar um eine Drehachse angeordnete zweite Abtriebswelle (14), wobei die Drehachse der ersten Abtriebswelle (11) koaxial zur Drehachse der Antriebswelle (1) und die Drehachse der zweiten Abtriebswelle (14) beabstandet zur Drehachse der Antriebswelle (1) angeordnet ist, und mit einem Differenzialgetriebe (8), bei welchem eine Drehachse einer Eingangswelle (7) koaxial zur Drehachse der Antriebswelle (1) angeordnet ist, und einer Differenzialsperre (16) mittels welcher die Ausgleichsfunktion des Differenzialgetriebes (8) sperrbar ist, und wobei die Eingangswelle (7) des Differenzialgetriebes (8) abkoppelbar ausgeführt ist, **dadurch gekennzeichnet, dass** eine Drehachse einer drehbar angeordneten Nebenabtriebswelle (3) beabstandet zur Drehachse der Antriebswelle (1) und beabstandet zur Drehachse der zweiten Abtriebswelle (14) angeordnet ist, wobei die Nebenabtriebswelle (3) in permanenter Wirkverbindung mit der Antriebswelle (1) steht, wobei das Differenzialgetriebe (8) als Planetengetriebe ausgeführt ist und wobei die Differenzialsperre (16) zwischen einem Stirnradgetriebe (13) und einem Planetenrad (15) des Planetengetriebes angeordnet ist, wobei das Stirnradgetriebe (13) das Differenzialgetriebe (8) mit der zweiten Abtriebswelle (14) trieblich verbindet.

2. Verteilergetriebe nach Anspruch 1, **dadurch gekennzeichnet, dass** das Differenzialgetriebe (8) zwischen einem Flansch der Antriebswelle (1) und einem Stirnradgetriebe (13) angeordnet ist, wobei das Stirnradgetriebe (13) das Differenzialgetriebe (8) mit der zweiten Abtriebswelle (14) trieblich verbindet.

3. Verteilergetriebe nach Anspruch 1, **dadurch gekennzeichnet, dass** ein Sonnenrad (12) des Planetengetriebes (8) mit einem Stirnradgetriebe (13) wirkverbunden ist und das Hohlrad (10) des Planetengetriebes (8) mit der ersten Abtriebswelle (11) verbindbar ist.

4. Verteilergetriebe nach Anspruch 3, **dadurch gekennzeichnet, dass** die Nebenabtriebswelle (3) über ein weiteres Stirnradgetriebe (2) mit der Antriebswelle (1) in Wirkverbindung steht.

5. Verteilergetriebe nach Anspruch 1, **dadurch gekennzeichnet, dass** die Antriebswelle (1) mit einer Abtriebswelle des Differenzialgetriebes (8) über eine Differenzialsperre (16) verbindbar ist.

## Claims

1. Transfer box having a drive-input shaft (1) which is arranged so as to be rotatable about an axis of rotation and having a first drive-output shaft (11) which is arranged so as to be rotatable about an axis of rotation and having a second drive-output shaft (14) which is arranged so as to be rotatable about an axis of rotation, wherein the axis of rotation of the first drive-output shaft (11) is arranged coaxially with respect to the axis of rotation of the drive-input shaft (1) and the axis of rotation of the second drive-output shaft (14) is arranged spaced apart from the axis of rotation of the drive-input shaft (1), and having a differential gearing (8), in the case of which an axis of rotation of an input shaft (7) is arranged coaxially with respect to the axis of rotation of the drive-input shaft (1), and having a differential lock (16) by way of which the differential function of the differential gearing (8) can be locked, and wherein the input shaft (7) of the differential gearing (8) is designed to be decoupleable, **characterized in that** an axis of rotation of a rotatably arranged power take-off shaft (3) is arranged spaced apart from the axis of rotation of the drive-input shaft (1) and spaced apart from the axis of rotation of the second drive-output shaft (14), wherein the power take-off shaft (3) is permanently operatively connected to the drive-input shaft (1), wherein the differential gearing (8) is embodied as planetary gear set and wherein the differential lock (16) is arranged between a spur-gear mechanism (13) and a planet gear (15) of the planetary gear set, wherein the spur-gear mechanism (13) connects the differential gearing (8) in terms of drive to the second drive-output shaft (14).

2. Transfer box according to Claim 1, **characterized in that** the differential gearing (8) is arranged between a flange of the drive-input shaft (1) and a spur-gear mechanism (13), wherein the spur-gear mechanism (13) connects the differential gearing (8) in terms of drive to the second drive-output shaft (14).

3. Transfer box according to Claim 1, **characterized in that** a sun gear (12) of the planetary gear set (8) is operatively connected to a spur-gear mechanism (13), and the internal gear (10) of the planetary gear set (8) is connectable to the first drive-output shaft (11).

4. Transfer box according to Claim 3, **characterized in that** the power take-off shaft (3) is operatively connected to the drive-input shaft (1) by way of a further spur-gear mechanism (2).

5. Transfer box according to Claim 1, **characterized in that** the drive-input shaft (1) is connectable to a drive-output shaft of the differential gearing (8) by way of a differential lock (16).

## Revendications

1. Boîte de transfert comprenant un arbre d'entraînement (1) disposé de manière à pouvoir tourner autour d'un axe de rotation et un premier arbre de sortie (11) disposé de manière à pouvoir tourner autour d'un axe de rotation et un deuxième arbre de sortie (14) disposé de manière à pouvoir tourner autour d'un axe de rotation, l'axe de rotation du premier arbre de sortie (11) étant coaxial à l'axe de rotation de l'arbre d'entraînement (1) et l'axe de rotation du deuxième arbre de sortie (14) étant disposé à distance de l'axe de rotation de l'arbre d'entraînement (1) et comprenant un engrenage différentiel (8), un axe de rotation d'un arbre d'entrée (7) étant disposé de manière coaxiale à l'axe de rotation de l'arbre d'entraînement (1) et comprenant un verrouillage de différentiel (16) au moyen duquel la fonction de compensation de l'engrenage différentiel (8) peut être bloquée et l'arbre d'entrée (7) de l'engrenage différentiel (8), étant réalisé de manière à pouvoir être désaccouplé,
**caractérisée en ce qu'**un axe de rotation d'un arbre de sortie secondaire (3) disposé de manière rotative est disposé à distance de l'axe de rotation de l'arbre d'entraînement (1) et à distance de l'axe de rotation du deuxième arbre de sortie (14), l'arbre d'entraînement secondaire (3) étant en liaison fonctionnelle permanente avec l'arbre d'entraînement (1), l'engrenage différential (8) étant réalisé sous forme d'engrenage planétaire et le verrouillage de différentiel (16) étant disposé entre un engrenage à pignons droits (13) et un satellite (15) de l'engrenage planétaire, l'engrenage à pignons droits (13) reliant par entraînement l'engrenage différentiel (8) au deuxième arbre de sortie (14).

2. Boîte de transfert selon la revendication 1, **caractérisée en ce que** l'engrenage différentiel (8) est disposé entre une bride de l'arbre d'entrainement (1) et un engrenage à pignons droits (13), l'engrenage à pignons droits (13) reliant par entraînement l'engrenage différentiel (8) au deuxième arbre de sortie (14).

3. Boîte de transfert selon la revendication 1, **caractérisée en ce qu'**une roue solaire (12) de l'engrenage planétaire (8) est en liaison fonctionnelle avec un engrenage à pignons droits (13) et la couronne dentée (10) de l'engrenage planétaire (8) peut être connectée au premier arbre de sortie (11).

4. Boîte de transfert selon la revendication 3, **caractérisée en ce que** l'arbre d'entraînement secondaire (3) est en liaison fonctionnelle par le biais d'un engrenage à pignons droits supplémentaire (2) avec l'arbre d'entraînement (1).

5. Boîte de transfert selon la revendication 1, **caractérisée en ce que** l'arbre d'entraînement (1) peut être connecté à un arbre de sortie de l'engrenage différentiel (8) par le biais d'un verrouillage de différentiel (16).
